# EUROPEAN PATENT SPECIFICATION

(11) **EP 3 065 137 B1**
(45) Date of publication and mention of the grant of the patent: **26.09.2018**
(21) Application number: 14856854.6
(22) Date of filing: 19.03.2014
(51) Int. Cl.: G21C 11/00, G21C 7/08

(54) **METHOD FOR GUARANTEEING FAST REACTOR CORE SUBCRITICALITY UNDER CONDITIONS OF UNCERTAINTY REGARDING THE NEUTRON-PHYSICAL CHARACTERISTICS THEREOF**
VERFAHREN ZUR GEWÄHRLEISTUNG VON SCHNELLER REAKTORKERNSUBKRITIKALITÄT UNTER UNSICHEREN BEDINGUNGEN HINSICHTLICH DER NEUTRONENPHYSIKALISCHEN EIGENSCHAFTEN DAVON
PROCÉDÉ POUR GARANTIR UNE SOUS-CRITICITÉ DE LA ZONE ACTIVE D'UN RÉACTEUR RAPIDE DANS DES CONDITIONS D'INCERTITUDE DE SES CARACTÉRISTIQUES NEUTRONIQUES-CHIMIQUES

(30) Priority: 31.10.2013 RU 2013148441
(43) Date of publication of application: 07.09.2016
(73) Proprietor: Joint Stock Company "Akme-Engineering", Moscow 115035 (RU)
(72) Inventor: MELNIKOV, Kirill Gennadievich, Kaluzhskaya obl. 249000 (RU); TORMYSHEV, Ivan Vladimirovich, Kaluzhskaya obl. 249037 (RU); SHARIKPULOV, Said Mirfaisovich, Moskovskaya obl. 143083 (RU); BULAVKIN, Sergey Viktorovich, Moscow 127410 (RU); FILIN, Aleksandr Ivanovich, Moscow 107065 (RU); BOROVITSKY, Stepan Artemovich, Moscow 115597 (RU)
(74) Representative: Mitev, Mitko Karushkov
(86) International application number: PCT/RU2014/000170
(87) International publication number: WO 2015/065233

(56) References cited:
- DE-A1- 2 365 531
- DE-A1- 3 149 536
- RU-C1- 2 442 234
- RU-C2- 2 167 456
- RU-C2- 2 167 456
- US-A- 5 742 655
- US-A1- 2005 135 547
- US-A1- 2011 002 432

## Description

Method for ensuring fast reactor core subcriticality under conditions of uncertainty regarding the neutronic characteristics thereof.

### Field of the invention

The invention relates to the method for ensuring fast reactor core subcriticality under conditions of uncertainty regarding the neutron-physical characteristics thereof using adjustable reactivity rods, to nuclear power engineering and can be used in power plants with fast neutrons.

### Related art

A method of nuclear reactor control is currently in use, according to which a reflector that surrounds the nuclear reactor active zone consists of many elements installed with possibility of rotational movement relative to each other so that the dimensions of voids and neutrons free path voids through the reflector could be varied in order to control the active zone reactivity (GB1148093, G21C7/28, 1969).

The method of pressure tube reactor fuel cycle implementation is currently in use; it is realized by means of formation of the active zone by loading fuel assemblies with distributed neutron absorber during programmed rearrangements and extraction of fuel rod assemblies, programmed movements of rod of the system for control, protection and replacement of additional absorbers to partially spent fuel assemblies, at that during the reactor operation after all additional absorbers are unloaded, a part of fully immersed rods of the control system is replaced to cluster-type rods, and the fuel used with the distributed neutron absorber is uranium-erbium fuel with U feed enrichment 0.2-0.5 % higher than feed enrichment of the uranium-erbium fuel loaded before the rods of the control and protection system were extracted (RU 2218613, G21C7/04, G21D3/08, 2003).

The method of investigation of physical characteristics of the active zone of a very high temperature reactor with spherical fuel elements of a critical assembly is currently in use; it is characterized in that the active zone is warmed up by a heater that creates a certain thermal field in the pebble, further on the active zone and reflectors dimensions and position is changed relative to the thermal field, preset by the heater, by means of partial replacement of fuel elements to spheres made of the reflector material and visa versa peripherally the active zone (SU 1831170, G21C17/00, G21C1/00, 1995).

The method of subcritical nuclear facilities manufacturing is currently in use, at that the control of these facilities is performed by a part of the reflector that ajoins the active zone, as the nuclear reactor where this patent is implemented (patent RU 2167456, G21C1/00, G21C5/00, G21C7/28, 20.05.2001). In the nuclear reactor that contains the active zone, neutron moderators, fissile elements and reflectors, voids representing through channels are made in the active zone, part of the reflectors are made movable. Design of the device permits to keep neutron spectra, specific to fast-neutron reactors, in the cores, at that thermal neutron spectrum is achieved in the space with laser elements. With account of the results obtained as well as well-known facts about uranium-graphite channel type RBMK reactors it is illustrated that they can be modified to subcritical nuclear devices that can be controlled by a part of a side reflector, at that excluding the possibility of local critical amounts creation and transforming the positive void coefficient to the negative one.

The analogs described above are not intended to ensure the guaranteed subcriticality of a fast-neutron reactor core in case of uncertainties that can lead to actual parameters shift from the preset ones.

The use of adjustable reactivity rods is known form patent document DE 3149536, G21C9/02, G21C7/08, 1983.

Nowadays, the safe control algorithm of the control and protection system rods is used in some fast-neutron reactor facilities projects on order to compensate reactivity margin for fuel burnup and control of the reactor neutron power; in accordance with this algorithm part of the rods that are immersed to the core and compensate the burnup are disconnected from the control system. The remaining rods support criticality and power control. Thus, the whole system of shim rods is divided into two groups: the group of interruptible rods that compensate reactivity change within a campaign and do not participate in automatic control of the group of shim rods, and the group of operating shim rods that participates in the plant control together with power-control rods. The campaign is performed by intervals (microcampaigns) that correspond to the production of reactivity equal to the efficiency of one or two groups of shim rods.

The closest prior art of this invention is the method of ensuring the fast neutron reactor core guaranteed subcriticality using "light" controlling elements without strict requirements to response speed and located in the reflectors block near the core edge; the method is used in the project of fast neutron reactor plant BREST-OD-300 with active zone characterized in small reserves and effects of reactivity that allows using "light" controlling elements without setting strict requirements on response speed and locate them in reflector blocks near the core edge (http://technics.rin.ru/index/?a=3&id=610).

The disadvantage of the closest prior art is the restriction of its use in case of uncertainty of physical characteristics of the nuclear reactor core, determined by either absence of experimental findings of the core physical characteristics or presence of subcriticality margin less than the delayed neutron fraction required for the corresponding fuel column of the reactor and not enough for compensation of uncertainties that result in deviation of actual characteristics from the preset values.

### Summary of the invention

The objective achieved by the invention is determined by the necessity of fulfillment of the requirements of regulatory documents to reactor unit core subcriticality that must be not less than 1 % after activation of emergency protection, it requires an increased accuracy of grounding of major physical characteristics of the core, in particular, the accuracy of determination of the core loading and the accuracy of determination of weight of the control and protection system rods.

It is necessary to achieve this objective as the following uncertainties that result in deviation of actual characteristics from the preset values must be taken into account during design and grounding of neutronic and thermohydraulic characteristics of the core:
- technological uncertainties during construction of the core elements and the reactor plant components;
- errors of calculated values of basic functional characteristics (effective multiplication factor, weight of the control and protection system rods, power density fields);
- constant;
- methodic;
- systematic.

At the current state of the art it is known that ensuring the accuracy the core charge and accuracy of determination of weight of the control and protection system rods can be reached only by means of physical experiments at the reactor.

The claimed method allows ensuring fast reactor core subcriticality under conditions of uncertainty of its neutronic characteristics without experiments. This possibility is determined by new essential features of the invention, in particular, due to location of adjustable reactivity rods on the side reflector of the core, that enlarges subcriticality margin (to the value not less than delayed neutron fraction) sufficient for compensation of the uncertainties that result in deviation of actual characteristics from design values, at that boron B-10 isotope enrichment of the core compensating rods is less than enrichment of the adjustable reactivity rods in the core side reflector.

Technical results that arise out of implementation of this method are as follows:
- elimination of excessive conservatism that results in more strenuous operating conditions of absorber elements of the compensating rods group;
- elimination of the necessity of increasing the rods travel of compensating group as well as simplification of the monitoring method during manufacturing;
- elimination of the necessity of separate absorber elements design for each nuclear reactor that ensure necessary subcriticality margin during the whole campaign and have corresponding performance during the whole service life of the core;
- simplification of safe reactor control algorithm.

The achievement of all above-mentioned technical results is determined by the presence of adjustable reactivity rods in the mortises of the core reflectors block (blocks) or in the mortises of the core reflectors; while the adjustable reactivity rods are installed on the level of the fuel part of the core, where boron B-10 isotope enrichment of the core compensating rods is less than enrichment of the adjustable reactivity rods in the core reflector.

If necessary, replacement of the adjustable reactivity rods with insufficient enrichment to other adjustable reactivity rods or installation of such adjustable reactivity rods that ensure the level of subcriticality preset by the design, is carried out by means of replacement of a part of the core reflector blocks to substitute reflector blocks with adjustable reactivity rods with required enrichment.

Due to the presence of adjustable reactivity rods operating conditions of compensating group rods absorber elements improve, as adjustable reactivity rods of the core side reflector undertake the major role in elimination of actual neutronic and thermohydraulic characteristics of the core from preset values. So, safe reactor control algorithm becomes safer. As enrichment of adjustable reactivity rods of the core side reflector on the level of the core fuel part is lower than enrichment of the core compensating rods, "coarser" regulation is carried out by means of adjustable reactivity rods of the core side reflector. At that gaining of the core characteristics proximate to the preset ones is ensured by less travel of rods of the compensating group during the core assembly and commissioning as well as during operation.

### Brief description of drawing views

The drawing illustrates the schematic view of a nuclear reactor core.

### Embodiment

The nuclear reactor contains a housing (not shown on the drawing) where core 1 is located as well as core reflector 2 around it. Active zone 1 contains fuel assemblies that consist of fuel rods, at that one or several fuel assemblies contain compensating rods with an absorber element, they create a compensating group of rods. The rods of the compensating group are made with possibility of their heightwise movement.

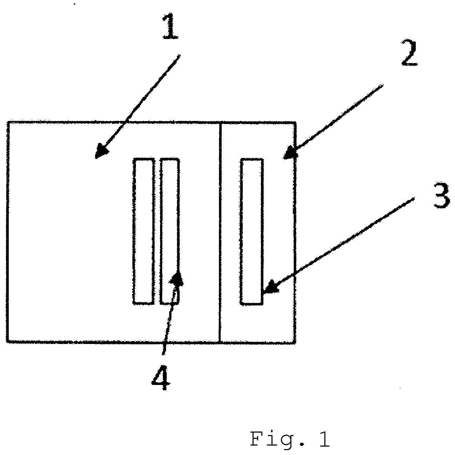

Reflector 2 of the core can be made of separate blocks installed with possibility of their replacement (substitute blocks of the core reflector). Construction of core reflector 2 (Fig. 1) or substitute blocks of the core reflector includes mortises located on the level of the core fuel zone intended to install adjustable reactivity rods into them. Core reflector 2 or its separate blocks can be made with possibility to install and extract the mortises for adjustable reactivity rods.

Boron-10 isotope enrichment of the rods of compensating group of the core is selected less than enrichment of adjustable reactivity rods 3 installed in the core reflector blocks.

In accordance with the claimed method compensation of technological uncertainties, errors (constant, methodical, systematic) of calculated values of basic functional characteristics (effective multiplication factor, weight of the control and protection system rods, power density fields) is performed as follows.

After the core 1 is assembled, physical measurements of the core subcriticality are performed using well-known methods, and comparison of the obtained results and design values is carried out.

In case of deviation of the obtained characteristics and design values, adjustable reactivity rods with enrichment that ensures the subcriticality value preset by the design are installed in the reactor on the level of the core 4 fuel part.

After adjustable reactivity rods are installed on the level of the core fuel part, additional physical measurements of the core subcriticality are performed, in case deviation of the obtained characteristics and design values is found again, replacement of a part of blocks of the core reflector 2 with adjustable reactivity rods to substitute reflector blocks with adjustable reactivity rods is performed, at that the adjustable reactivity rods have other enrichment, which is necessary and enough to obtain the subcriticality level preset by the design.

Besides, compensation of technological uncertainties and errors is possible without replacement of a part of the core reflector blocks. In this case adjustable reactivity rods are either installed to the reflector 2 mortises or to the reflector block (blocks) or they are extracted from the reflector 2 mortises or from the reflector block (blocks); at that adjustable reactivity rods with required enrichment are installed at their place, it allows ensuring the preset subcriticality level.

"Finer" adjustment of the core characteristics is performed by the compensating group rods absorber elements of the core rods installed in the fuel assemblies of the core. Quantity of adjustable reactivity rods and side reflector blocks with installed adjustable reactivity rods is determined after performing neutronic measurements in order to check final characteristics of the core during its assembly.

Using adjustable reactivity rods permits to have large control margin during the nuclear reactor operation as regulation of the core characteristics is performed by the compensating group rods absorber elements when the core operates in the mode, proximate to the design mode, both during commissioning and operation; at that it is possible by means of less travel of the compensating group rods.

For example, for a certain core construction boron-10 isotope enrichment of the adjustable reactivity rods can be higher (up to 80-90 %) than boron-10 isotope enrichment of the core compensating rods that can be about 40-50 %. In other cases boron-10 isotope enrichment of the core compensating rods can reach over 90 %, at that enrichment of the adjustable reactivity rods can be over 96 %. But their efficiency will depend on the quantity of rods in the core with 93 %). If this quantity is too small and average enrichment is less than 93 %, the higher the enrichment of adjustable reactivity rods is, the higher their efficiency is.

## Claims

1. Method of ensuring the fast neutron reactor core (4) is guaranteed subcriticality under conditions of uncertainty **characterized in that** after the core is assembled, physical measurements of the core subcriticality are performed using well-known methods, and comparison of the obtained results and design values is carried out; in case of deviation of the obtained characteristics and design values, adjustable reactivity rods (3) with enrichment that ensures the subcriticality value preset by the design are installed in the reactor on the level of the core fuel part; and the boron-10 isotope enrichment of the adjustable reactivity rods is selected higher than the boron-10 isotope enrichment of the core compensating rods.

2. Method in accordance with claim 1 **characterized in that** the adjustable reactivity rods are located in one, several or all blocks of the core reflector (2), the installation of adjustable reactivity rods is performed by installation of the core reflector blocks with adjustable reactivity rods installed inside them, and the rods are located on the level of the core fuel part.

3. Method in accordance with claim 1 **characterized in that** the adjustable reactivity rods are installed in the core reflector mortises.

4. Method in accordance with claim 1 **characterized in that** after the adjustable reactivity rods are installed on the level of the core fuel part, additional physical measurements of the core subcriticality are performed, in case of deviation of the obtained characteristics and design values is found again, replacement of adjustable reactivity rods with insufficient enrichment to adjustable reactivity rods with enrichment that ensures obtaining the subcriticality level preset by the design, the replacement is performed by means of removing of one or several blocks of the core reflector and installation of the substitute reflector blocks with adjustable reactivity rods with the required enrichment.

5. Method in accordance with claim 3 **characterized in that** after the adjustable reactivity rods are installed on the level of the core fuel part, additional physical measurements of the core subcriticality are performed, in case of deviation of the obtained characteristics and design values is found again, replacement of adjustable reactivity rods with insufficient enrichment to adjustable reactivity rods with enrichment that ensures obtaining the subcriticality level preset by the design, the replacement is performed by means of extraction of adjustable reactivity rods from the reflector mortises and installation of other adjustable reactivity rods with the required enrichment.

## Patentansprüche

1. Gewährleistungsmethode der garantierten Unterkritikalität der Spaltzone 5 des schnellen Reaktors unter den Bedingungen der Unbestimmtheit, die dadurch charakterisiert wird, dass nach der Montage der Spaltzone physische Bemessungen der Unterkritikalität der Spaltzone durchgeführt werden und die dadurch gewonnenen Parameter mit den berechneten Kennwerten verglichen werden. Falls die erhaltenen Parameter von den berechneten Kennwerten abweichen, werden im Reaktor auf der Ebene des Brennstoffteils der Spaltzone die Anpassungsstäbe der Reaktivität mit der Bereicherung eingebaut, die die Erreichung des im Projekt angegebenen Unterkritikalitätskennwertes gewährleistet. Dabei wird die Bereicherung der Anpassungsstäbe nach dem Bor B- 10-Isotop höher ausgewählt als die Bereicherung
der Kompensationsstäbe der Spaltzone 15 nach dem Bor B-10.

2. Die Methode zum P. 1, die **dadurch gekennzeichnet** wird, dass die Anpassungsstäbe der Reaktivität in einem, in mehreren oder in allen Blöcken des Spaltzonereflektors eingebaut werden, dabei werden die Anpassungsstäbe
durch die Montage der Blöcke der Spaltzonereflektors eingebaut, mit den sich darin befindenden Anpassungsstäben der Reaktivität, die auf der Ebene des Brennstoffteils der Spaltzone platziert sind.

3. Die Methode zum P. 1, die **dadurch gekennzeichnet** wird, dass die Anpassungsstäbe der Reaktivität in den Nesten des Spaltzonereflektors eingebaut werden.

4. Die Methode zum P. 2, die **dadurch gekennzeichnet** wird, dass nach dem Einbau der Anpassungsstäbe der Reaktivität auf der Ebene des Brennstoffteils der Spaltzone zusätzliche physikalische Bemessungen der Unterkritikalität der Spaltzone durchgeführt werden. Falls die dadurch gewonnenen Parameter sich von den berechneten Kennwerten unterscheiden, werden die Anpassungsstäbe der Reaktivität mit der verbesserungsbedürftigen Bereicherung durch die Anpassungsstäbe der Reaktivität mit der Bereicherung, die die Erreichung des im Projekt angegebenen Unterkritikalitätskennwertes gewährleistet ersetzt. Dabei werden die Anpassungsstäbe der Reaktivität durch die Abnahme von einem oder von mehreren Blöcken des Spaltzonereflektors und durch den Einbau stattdessen von wechselbaren Blöcken des Spaltzonenreaktors mit den Anpassungsstäben der Reaktivität mit der notwendigen Bereicherung ersetzt.

5. Die Methode zum P. 3, die **dadurch gekennzeichnet** wird, dass nach dem Einbau der Anpassungsstäbe der Reaktivität auf der Ebene des Brennstoffteils der Spaltzone zusätzliche physikalische Bemessungen der Unterkritikalität der Spaltzone durchgeführt werden. Falls die dadurch gewonnenen Parameter sich von den berechneten Kennwerten unterscheiden, werden die Anpassungsstäbe der Reaktivität mit der verbesserungsbedürftigen Bereicherung durch die Anpassungsstäbe der Reaktivität mit der Bereicherung, die die Erreichung des im Projekt angegebenen Unterkritikalitätskennwertes gewährleistet ersetzt. Dabei werden die Anpassungsstäbe der Reaktivität durch die Entnahme von den einen Anpassungsstäben der Reaktivität aus den Nesten des Spaltzonenreaktors und den Einbau stattdessen von den anderen Anpassungsstäben mit der notwendigen Bereicherung ersetzt.

## Revendications

1. Le procédé d'assurer la sous-criticité garantie de la zone active 5 réacteur à neutrons rapides dans les conditions de l'incertitude, qui est **caractérisé par** ce, qu'après le montage de la zone active, on réalise les mesurages physiques de la sous-criticité de la zone active et on accomplit la comparaison des caractéristiques obtenues par rapport aux valeurs de projet, et après cela, en présence des écarts des valeurs des caractéristiques obtenues par rapport aux valeurs de projet, dans le réacteur au niveau de la partie de combustible de la zone active, on installe les barres d'ajustage de la réactivité avec l'enrichissement, qui assure l'obtention de la valeur de sous-criticité, fixée dans le projet, étant précisé dans ce cas, que l'enrichissement des barres d'ajustage de la réactivité, en ce qui concerne l'isotope du bore B-10, est choisi plus grand, que l'enrichissement
de l'isotope du bore B-10 des barres de compensation de la zone active.

2. Le procédé indiqué dans le point Le procédé indiqué dans le point 1, qui est **caractérisé par** ce, que les barres d'ajustage de la réactivité sont installées dans un, dans plusieurs ou dans tous les blocs du déflecteur de la zone active, étant précisé dans ce cas, que l'installation des barres d'ajustage
est réalisée par voie du montage des blocs du déflecteur de la zone active avec les barres d'ajustage de la réactivité installées dans l'intérieur, situées au niveau de la partie de combustible de la zone active.

3. Le procédé indiqué dans le point 1, qui est **caractérisé par** ce, que les barres d'ajustage de la réactivité sont installées dans les prises du déflecteur de la zone active.

4. Le procédé indiqué dans le point 2, qui est **caractérisé par** ce, qu'après l'installation des barres d'ajustage de la réactivité au niveau de la partie de combustible de la zone active, on réalise les mesurages physiques supplémentaires de la sous-criticité de la zone active et au cas des écarts des valeurs des caractéristiques obtenues par rapport aux valeurs de projet, on remplace les barres d'ajustage de la réactivité ayant l'enrichissement insuffisant par les barres d'ajustage de la réactivité ayant l'enrichissement, qui assure l'obtention de la valeur de la sous-criticité fixée dans le projet, étant précisé dans ce cas, que le remplacement des barres d'ajustage de la réactivité se fait par voie de l'enlèvement d'un ou de plusieurs blocs du déflecteur de la zone active et par voie de l'installation à leur place des blocs de rechange du déflecteur avec les barres d'ajustage ayant l'enrichissement requis.

5. Le procédé indiqué dans le point 3, qui est **caractérisé par** ce, qu'après l'installation des barres d'ajustage de la réactivité au niveau de la partie de combustible de la zone active, on réalise les mesurages physiques supplémentaires de la sous-criticité de la zone active et au cas des écarts des valeurs des caractéristiques obtenues par rapport aux valeurs de projet, on remplace les barres d'ajustage de la réactivité ayant l'enrichissement insuffisant par les barres d'ajustage de la réactivité ayant l'enrichissement, qui assure l'obtention de la valeur de la sous-criticité fixée dans le projet, étant précisé dans ce cas, que le remplacement se fait par voie de l'enlèvement, des prises correspondants du déflecteur, d'uns barres d'ajustage de la réactivité et par voie de l'installation à leur place d'autres barres d'ajustage de la réactivité ayant l'enrichissement requis.
